**Europäisches Patentamt**

**European Patent Office**

**Office européen des brevets**

(19)

(11) Publication number: **0 158 548**

**A1**

(12) **EUROPEAN PATENT APPLICATION**

(21) Application number: **85400467.8**

(22) Date of filing: **12.03.85**

(51) Int. Cl.⁴: **H 04 N 7/173**
**H 04 N 1/00**

(30) Priority: **16.03.84 NL 8400860**

(43) Date of publication of application:
**16.10.85 Bulletin 85/42**

(84) Designated Contracting States:
**AT BE CH DE FR GB IT LI NL SE**

(71) Applicant: **International Standard Electric Corporation**
**320 Park Avenue**
**New York New York 10022(US)**

(84) Designated Contracting States:
**BE CH DE FR GB IT LI SE AT**

(71) Applicant: **Nederlandsche Standard Electric**
**Maatschappij, B.V.**
**1e van der Kunststraat 292 P.O. Box 16013**
**NL-2500 BA The Hague(NL)**

(84) Designated Contracting States:
**NL**

(72) Inventor: **Waalboer, Hendrik**
**Wingerdpark 89**
**Zoetermeer(NL)**

(74) Representative: **Pothet, Jean**
**c/o ITT Data Systems France S.A. Tour Maine**
**Montparnasse 33, avenue du Maine**
**F-75755 Paris Cedex 15(FR)**

(54) **Cable television network.**

(57) Cable television network provided with a local centre (1) transmitting television signals via a bus (2) to a number of exchanges (3) that retransmit these signal via subscriber lines (5a..., 5n) to subscriber stations, (4a..., 4n). Each of the subscriber stations (4a..., 4n) is provided with means (6) for generating selection signals which are transmitted via the subscriber's line (5a..., 5n) to the respective exchange (3) and, from there, via said bus (2) to the local centre (1). The local centre (1) is provided with means for receiving and decoding these selection signals, as well as with means for transmitting a television signal which corresponds to any given selection signal, preceded by a control signal containing subscriber identification information, via said bus (2) to the exchanges (3). The exchanges (3) are provided with means (9, 12) for decoding the control signals and for transmitting the corresponding television signals to the subscriber station identified in the control signal, via the respective subscriber line under control of said decoding means (9).

./...

fig-1

The invention relates to a cable television network provided with a local centre transmitting television signals via a bus to a number of exchanges that retransmit these signals via subscriber lines to subscriber stations.

Such a cable television network is known from the prior art for the transmission of television programme signals from a local centre to subscriber stations. The exchanges ensure that, regardless of the transmission method applied between the local centre and the exchanges, the television programme signals are transmitted in normally available television channels to the subscriber stations, so that they can be received by normal television receivers.

In addition to transmitting television programme signals, it is known to supply video text signals to subscriber stations, which can be displayed by suitable television receivers. In one method, this takes place through so-called broadcast video text signals. Information bits are modulated on lines of the frames of a normal television programme signal, which are not used for programme transmission. In another method, this takes place through an interactive video text system wherein selectively accessed information is received via the public telephone network. This method is fairly slow because the bandwith of the lines in the existing telephone network allows a maximum transmission speed of 1200 bits/seconds only.

A higher transmission speed is achieved if such information is modulated on the lines of a normal video signal and is transmitted to the subscribers via a cable television network. However, in this case, the number of available television channels in a network is generally limited whereas the number of active video text subscribers connected to the network at a given moment may be high and reach thousands or tens of thousands.

Consequently, the present invention relates to a method and means for transmitting television signals having restricted information contents via a cable television network. By television signals having a restricted information contents it is meant here signals of one of the above mentioned systems, such as video text or teletext, or an analogue television signal of a relatively short duration, such as a relatively short succession of television frames containing an advertising message.

This object is achieved in a cable television network of the type mentioned in the preamble, in that each of the subscriber stations is provided with means for generating selection signals, which are transmitted via the subscriber's line to the respective exchange and, from there, via said bus to the local centre, in that the local centre is provided with means for receiving and decoding these selection signals, as well as with means for transmitting a television signal which corresponds to any given selection signal, preceded by a control signal containing subscriber identification information, via said bus to the exchanges, and in that the exchanges are provided with means for decoding the control signals and for transmitting the corresponding television signals to the subscriber station identified in the control signal, via the respective subscriber line under control of said decoding means. In this system, the subscriber is given the possibility, through the selection signal generating means which include, for example, a simple keyboard, of requesting predetermined information from the local centre. This information, provided with an appropriate subscriber identification information, contained in an associated control signal, is subsequently transmitted to this subscriber.

Preferably, the cable television network according to the present invention is designed so that any exchange comprises means for transmitting a predetermined television signal with  predetermined image contents to all the subscriber station which are not receiving selectively requested television signals. Said television signal with predetermined image contents may for example be a television signal having a constant black level between the synchronization pulses. Each subscriber who tunes to the information channel but does not ask for particular information therefore receives a black picture. It is also possible to display on the screen, instead of this black image, a predetermined message, for example instructions concerning the operation of the selection means or other information of interest to the subscriber, relating for example, to the use of the cable network. Since, in this way, each subscriber station tuned to the information channel also remains continuously synchronized, this avoids any synchronization problem when, after sending of selection signal, the corresponding relatively short television signal is received.

The television signals may at least partially consist in video text signals occupying one or more lines in a normal television signal and, in that case, the subscriber stations in the cable television network according to the invention are provided with a video text decoding unit which, from the video text signals received, generates a complete television signal .

As already mentioned, the television signals may also at least partially consist in analogue television frame signals and, in that case, the subscriber stations in the network according to the invention are provided with a frame memory storing the received television signals in order to subsequently generate a permanent picture.

In order to maintain synchronization, the network is preferably designed so that the exchanges are provided with a switching matrix which under the control of said control signal decoding means switches through, instead of the signal with predetermined image contents, a predetermined number of picture lines corresponding to the selected television signal, said switching operations occuring simultaneously with the line synchronization pulses.

In the more common case where both video text signals and analogue image signals are available, the cable television network according to the invention is designed so that the control signal is followed by a subscriber station control signal which contains information concerning the type of the associated television signal and the subscriber station is provided with switching means responding to said subscriber station control signal so that the following television signal is passed either to the video text decoding unit or to the frame memory.

A saving in the components required, especially in the decoding unit, is achieved if the video text decoding unit is also used for decoding the subscriber station control signal and for switching the frame memory into the reception path when an analogue television signal is received.

In the currently known systems for the transmission of video text signals or similar signal via the public telephone network, it is necessary to pay for the transmission, either for the telephone fee only or for telephone fee and the requested information pages. If now such information is transmitted, in the manner already described above, via a cable television network, costs should also often be considered. This applies also when teletext signals, analogue signals and the like are being transmitted. According to a preferred embodiment, the network is therefore designed so that the control signal transmitted by the local centre contains cost information and that each exchange is provided with counters, respectively assigned to  particular subscriber stations, the readings of which increase in accordance with the cost information in the control signals.

The invention will be discussed in more detail hereinafter by refering to the accompanying figures which represent :

Figure 1, a black diagram of a cable television network designed in accordance with the invention,

Figure 2, an embodiment of a subscriber station in accordance with claims 3, 4 and 7.

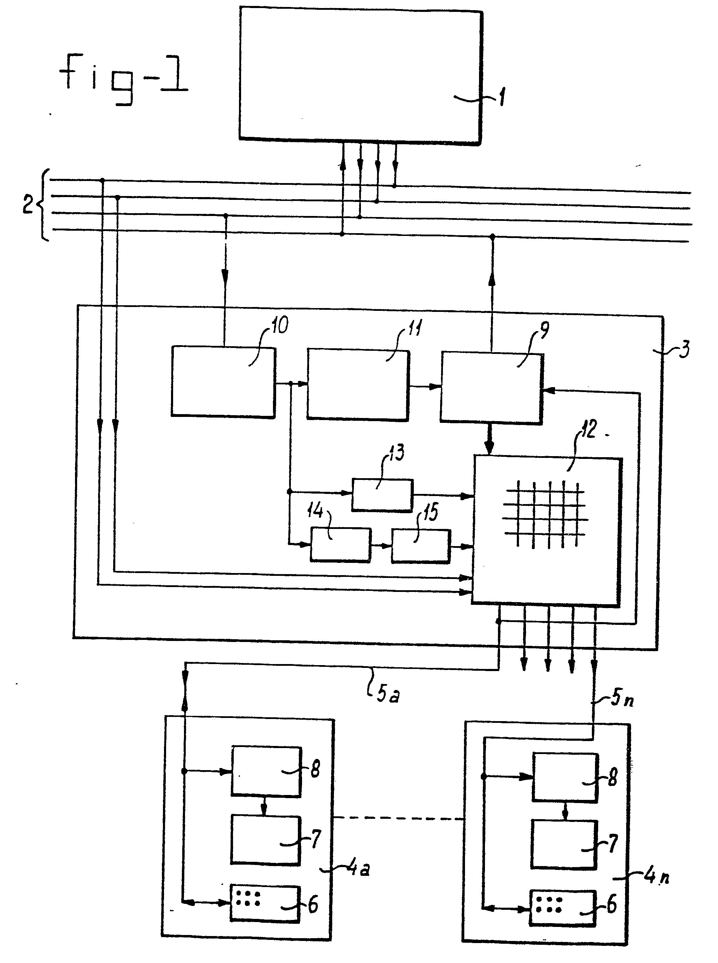

Figure 1 shows a cable television network according to the invention comprising a local centre 1, a bus 2 via which the local centre 1 is connected to a number of exchanges one of which is designed as 3 in the Figure, and a number of subscriber stations such as the ones identified as 4a..., 4n, the latter  being connected to the corresponding exchange 3 through the respective subscriber lines 5a..., 5n.

Each subscriber station 4a..., 4n is provided with selection means, e. g., a keyboard 6, a standard television receiver 7 and a subscriber unit 8. The subscriber transmits a selection signal, via the keyboard 6, for calling up a particular piece of information. This selection signal is transmitted via the subscriber line 5a to the exchange 3 in which this signal is received in a logic control unit 9. Logic control unit 9 transmits this selection signal, or a modified signal corresponding thereto, to local centre 1 via bus 2. In local centre 1, the selection signal is decoded and, in response to this selection signal, the requested television signal is now transmitted by the local centre. For this purpose, the local centre comprises video signal sources, for example a video text data base, for transmitting video text signals, or a source of analogue television signals of relatively short duration. Frequently, the latter do not represent more than one complete picture.

The requested television signal is transmitted from local centre 1 via bus 2 to each exchange in the network, preceded by a control signal, comprising at least subscriber identification information. This control signal is fed in exchanges 3, into a demodulator 10 converting the received television signal as well as the associated control signal to the base band. The control signal is subsequently fed to the control signal decoding unit 11. If the subscriber identification in the control signal indicated that the particular subscriber is connected to the exchange, the control signal decoding unit will report this to logic control unit 9. If the subscriber identification information shows that the particular subscriber is not connected to this exchange, no further action is taken.

Logic control unit 9 now controls the switching matrix 12 so that the identified subscriber station is connected to a modulator 13. The television signal sent out by the local centre is modulated, in modulator 13, into the appropriate television channel and is transmitted to the particular subscriber station 4a..., 4n.

In order to ensure that subscriber stations which temporarily do not receive any selected television signals via the information channel, nevertheless remain synchronized, a filtered television signal is also generated in each exchange, comprising in fact synchronization pulses only with, inbetween a black level signal. Logic control unit 9 ensures that all subscriber stations to which a selected television signals is not being supplied will receive this filtered signal, resulting in a dark screen. In each exchange 3, a filter 14 and a modulator 15 are provided for this purpose, the output of the modulator 15 being coupled to the switch matrix 12.

Instead of an entirely black image it is of course also possible, through suitable means in exchange 3, to transmit an image with predetermined pictorial contents, for example a standard message or the like.

Each logic control unit 9 further comprises a number of counters, one for each subscriber station. In relation thereto, the control signals transmitted by the local centre furthermore include cost information which is used through control unit 9 to increase the readings of these cost counters.

As further shown in Figure 1, normal television programme signals are also transmitted from the local centre via bus 2 to each of the exchanges 3. These programme signals are received directly in the switch matrix and are transmitted within other channels to each of the subscriber stations 4a..., 4n.

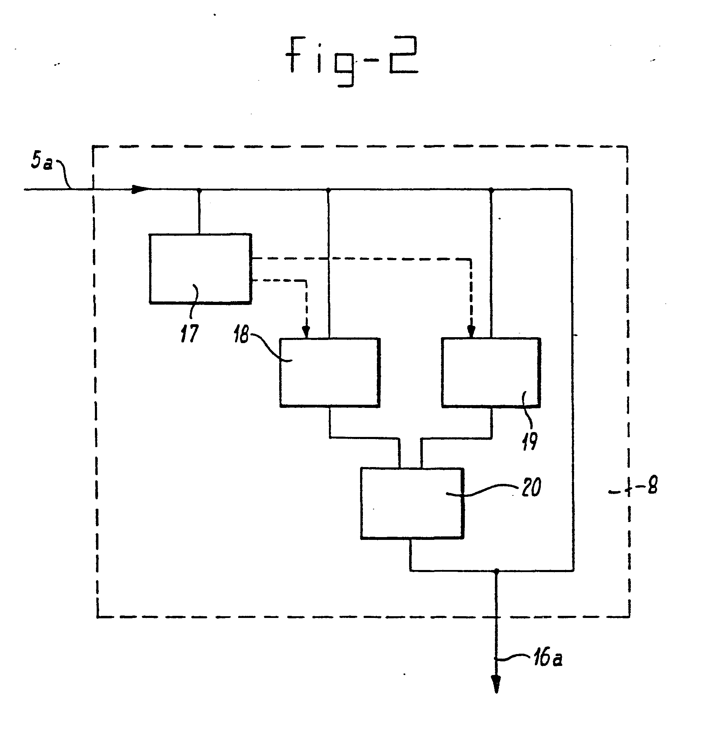

Figure 2 illustrates an embodiment of a subscriber unit 8 for the case in which both video text signals and analogue television signals of relative short duration are transmitted in the cable television network. Subscriber unit 8 receives the incoming signals at the input connected to subscriber line 5a. To distinguish from one another two types of television signals, the local centre transmits, in addition to the control signal, an extra subscriber station control signal which is processed in a decoding unit 17. The subscriber station control information indicates whether the subsequent television signals are video text signals or analogue signals. If video text signals are concerned, a video text decoding unit 19 is activated in order to receive the signal which follows the subscriber station control signal. If analogue signals are concerned, a frame memory 18 is activated in order to receive the television signal which follows the control signal. The outputs of frame memory 18 and of decoding unit 19 are connected to a modulator 20 which transmits the ultimate television signal, modulated within the appropriate channel, via output 16a to the television receiver. If normal television programme signals are concerned, the signal is transmitted directly, via the through-connection shown in the drawing, to output 16a and to the television receiver 7.

Instead of a specific unit 17, decoding unit 19 may decode the subscriber station control information. In that case, the appropriate transmission of the television signals to frame memory 18 or unit 19 is controlled by said unit 19. In that case, decoding unit 17 can be omitted.

CLAIMS

1. Cable television network provided with a local centre transmitting television signals via a bus to a number of exchanges that retransmit these signals via subscriber lines to subscriber stations, characterized in that each of the subscriber stations (4a..., 4n) is provided with means (6) for generating selection signals which are transmitted via the subscriber's line (5a..., 5n) to the respective exchange (3) and, from there, via said bus (2) to the local centre (1), that the local centre (1) is provided with means for receiving and decoding these selection signals, as well as with means for transmitting a television signal which corresponds to any given selection signal, preceded by a control signal containing subscriber identification information, via said bus (2) to the exchanges (3), and that said exchanges (3) are provided with means (9, 12) for decoding the control signals and for transmitting the corresponding television signals to the subscriber station identified in the control signal, via the respective subscriber line under control of said decoding means (9).

2. Cable television network according to claim 1, characterized in that each exchange is provided with means (14, 15) for transmitting a predetermined television signal with predetermined pictorial content to all subscriber stations which are not receiving selected television signals.

3. Cable television network according to claim 1 or 2, characterized in that said television signals consist at least partially in video text signals occupying one or more lines of a normal television signal and that the subscriber stations are provided with a video text decoding unit (19) which, from the video text signals received, generates a complete television signal.

4. Cable television network according to claim 1 or 2, characterized in that said television signals at least partially consist of analogue frame signals and that the subscriber stations are provided with a frame memory (18) storing the received television signals.

5. Cable television network according to claim 2, 3 or 4, characterized in that said exchanges are provided with a switching matrix (12) which under the control of said control signal decoding means (9) switches through, instead of the signal with predetermined contents, a predetermined number of pictures lines corresponding to the selected television signal, the switching operations occuring simultaneously with the line synchronization pulses.

6. Cable television network according to claims 3 and 4, characterized in that said control signal is followed by a subscriber station control signal which contains information concerning the type of television signal and that the subscriber station is provided with switching means (17) responding to said subscriber station control signal so that the subsquent television signal is passed either to said video text decoding unit or to said frame memory.

7. Cable television network according to claim 6, characterized in that said video text decoding unit (19) in the subscriber station is also used for decoding the subscriber station control signal and for switching the frame memory into the reception path when an analogue television signal is received.

8. Cable television network according to any one of the preceding claims, characterized in that said control signal transmitted simultaneously by the local centre contains cost information and that each exchange is provided with counters, each assigned to one subscriber station, the readings of the said counters increasing in accordance with the cost information in the control signals.

fig-1

1/2

0158548

# Fig-2

**EUROPEAN SEARCH REPORT**

0158548

Application number

EP  85 40 0467

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | 13TH INT. TV SYMPOSIUM, Montreux, 28th May - 2nd June 1983, Symposium Record, CATV Sessions, pages 16-26; W.K.RITCHIE: "An integrated services cable-TV network" * Page 21, line 18 - page 26, line 9 * | 1 | H 04 N  7/173 H 04 N  1/00 |
| Y | IDEM. | 2-7 | |
| | --- | | |
| A | 13TH INT. TV SYMPOSIUM, Montreux, 28th May - 2nd June 1983, Symposium Record, CATV Sessions, pages 258-277; P.F.JELGERSMA: "DELTACOM 2000 - A mini-star network with selection facilities and computer control" * Pages 263,264; page 271, lines 20-22 * | 1 | |
| | | | **TECHNICAL FIELDS SEARCHED (Int. Cl.4)** |
| Y | IDEM. | 2 | H 04 N  7/00 H 04 N  1/00 |
| | --- | | |
| Y | EP-A-0 043 167  (ACEC) * Page 4, line 9 - page 5, line 26; page 6, lines 7-24 * | 3-7 | |
| | ---            -/- | | |

The present search report has been drawn up for all claims

| Place of search | Date of completion of the search | Examiner |
|---|---|---|
| THE HAGUE | 21-06-1985 | DE ROECK A.F.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

**0158548**
Application number

EP 85 40 0467

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | NHK LABORATORIES NOTE, no. 158, February 1973, pages 1-15, Tokyo, JP; H.ANDO et al.: "Experimental transmission system of still picture broadcasting" * Page 9, lines 25-31; page 12, paragraph 2 * | 4-7 | |
| Y | IEEE TRANSACTIONS ON CONSUMER ELECTRONICS, vol. CE-25, no. 3, July 1979, IEEE, New York, US; H.G.BOWN et al.: "Telidon: A new approach to videotex system design" * Page 260, left-hand column, paragraph 1 - right-hand column, paragraph 1; page 263, left-hand column, paragraph 1 * | 6,7 | |
| A | 13TH INT. TV SYMPOSIUM, Montreux, 28th May - 2nd June 1983, Symposium Record, CATV Sessions, pages 336-352; E.J.GARGINI et al.: "A fully interactive cable television system" * Page 337, paragraphs 2,3 * | 8 | TECHNICAL FIELDS SEARCHED (Int. Cl.4) |
| X | GB-A-1 506 924 (PHILIPS) * Page 3, line 23 - page 5, line 5 * | 1 | |

The present search report has been drawn up for all claims

| Place of search THE HAGUE | Date of completion of the search 21-06-1985 | Examiner DE ROECK A.F.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82